# EUROPEAN PATENT SPECIFICATION

(11) **EP 1 221 463 B1**
(45) Date of publication and mention of the grant of the patent: **26.09.2007**
(21) Application number: 01300145.8
(22) Date of filing: 09.01.2001
(51) Int. Cl.: C08L 51/06, C08L 53/00, C08L 25/06, C08F 8/46, C08K 3/22, H01B 3/44

(54) **Resin composition, method of making it and electrical wire covered with it**
Harzzusammensetzung, Verfahrung zu deren Herstellung und damit übergezogener Leitungsdraht
Composé de résine, procédé pour obtenir la dite résine et câble électriques revêtu avec celui-ci

(43) Date of publication of application: 10.07.2002
(73) Proprietor: Sumitomo Wiring Systems, Ltd., Yokkaichi-City, Mie, 510-8503 (JP); Sumitomo Electric Industries, Ltd., Osaka (JP)
(72) Inventor: Sato, Masashi, 1-14 Nishisuehiro-cho Yokkaichi-ken, Mie (JP); Hase, Tatsuya, 1-14 Nishisuehiro-cho Yokkaichi-ken, Mie (JP); Fujimoto, Hiroshi, 1-14 Nishisuehiro-cho Yokkaichi-ken, Mie (JP)
(74) Representative: Paget, Hugh Charles Edward

(56) References cited:
- EP-A- 0 273 516
- EP-A- 0 973 174
- US-A- 5 561 185

## Description

### FIELD OF THE INVENTION

This invention relates to a halogen-free resin composition containing metal hydroxide, to a method of making the resin composition and to electrical wire having this resin composition as a covering on an electrical conductor core. Such an electrical wire is useful for example in a motor vehicle.

### DESCRIPTION OF THE PRIOR ART

Polyvinyl chloride has been much used as the covering material of electrical wire for an automobile, because it is superior in properties such as mechanical strength, extrusion processability, flexibility and colouring property. However, with recent concern for the global environment, halogen-free resin material has come to be used for the production of automobile parts including the covering of electrical wires in an automobile in place of polyvinyl chloride, because polyvinyl chloride discharges a harmful halogen gas on combustion.

A halogen-free resin composition in which a metal hydroxide is blended with a polyolefin-base polymer as a flame-retardant is known as a wear resistant resin composition having the merit of no generation of a poisonous gas such as a halogen gas on combustion (see JP-A-7-176219, JP-A-7-78518 and the like). In order that such a flame-retarding resin composition has a self-extinction property, a large quantity of a metal hydroxide is required to be added, but this causes problems that mechanical strength such as the wear resistance, tensile strength and the like of the composition are much reduced. In order to prevent the deterioration of mechanical strength, it may be considered that amounts of a polypropylene having a comparatively high hardness and a high density polyethylene are increased, but the flexibility of the covered electrical wire is reduced thereby and the processability becomes poor.

Various specific prior art proposals in this field will now be mentioned.

JP-A-6-290638 discloses resin compositions containing metal hydroxide for electrical wire insulation, in which the resin composition is based on polypropylene (>80%). Additional components are polyethylene modified with acid anhydride and styrene copolymer.

US-A-5561185 describes resin composition for electrical wires containing metal hydroxide, in which the resin components are (a) 40 - 88.5% by weight of propylene which is 50% by weight or more of a ethylene/propylene random copolymer, (b) 1.5 to 30% by weight of a polyethylene modified with carboxylic acid derivative, e.g. maleic anhydride and (c) 10 to 48% by weight of an ethylene-series copolymer, typically ethylene/vinyl acetate copolymer.

US-A-5180889 also describes a resin composition containing metal hydroxide as a covering of conductors in a crush resistant cable assembly. The resin components are (a) a low density copolymer of ethylene and alphaolefin, (b) an elastomeric styrene-ethylene-butylene-styrene tri-block copolymer, preferably modified with maleic anhydride and (c) optionally an impact propylene and copolymer or polypropylene. Component (a) in the examples is 50% by weight or more of the total resin components.

EP-A-273516 proposes flame retardant insulation compositions comprising a functionalized selectively hydrogenated monoalkenyl arene-conjugated diene block copolymer (e.g. styrene-ethylene/butylene-styrene block copolymer modified with maleic anhydride), polypropylene, plasticizer and hydrated inorganic filler (e.g. aluminium hydroxide).

### SUMMARY OF THE INVENTION

The object of the present invention is to provide a halogen-free olefin-based resin composition comprising a mixture of selected components providing a good balance of properties, for example wear resistance, flame resistance, tensile property, flexibility and the like which are required for the covering material of an electrical wire, e.g. for an automobile.

The present invention provides a non-crosslinking and wear resistant halogen-free resin composition having good mechanical strength without loss of flexibility and being suitable for extrusion as an electrical wire covering and readily processable.

The present invention provides a resin composition containing the components:-
(a) 40 - 90 parts by weight of a block copolymer of polypropylene segments and ethylene-propylene copolymer segments which is modified with acid anhydride and in which the polypropylene segment content is in the range 5 - 50% by weight,
(b) 60 - 10 parts by weight of a styrene-based polymeric elastomer,
   wherein the total of components (a) and (b) is 100 parts by weight and no other resin component is present in the composition, and
(c) 30 - 200 parts by weight of a metal hydroxide.

The respective components contained in the composition of the present invention are selected to provide the desired properties and are illustrated as follows.

Component (a) is an elastomeric block copolymer of polypropylene segments and ethylene-propylene copolymer segments, modified with acid anhydride, preferably 0.1 to 10% by weight of acid anhydride. The amount of the polypropylene segments in the polymer is in the range 5 to 50% by weight, preferably 15 to 45%. The polypropylene forms hard segments in the molecule while the ethylene-propylene copolymer forms relatively soft segments.

This copolymer, modified with a carboxylic acid anhydride, may be a copolymer prepared by either a graft process or a direct process.

The graft process is a process of previously copolymerizing polypropylene with ethylene-propylene copolymer and then grafting 0.1 - 10% by weight of an acid anhydride, by means of a peroxide or the like. The direct process is a process of copolymerizing a polypropylene with ethylene-propylene copolymer in the presence of 0.1 - 10% by weight of an acid anhydride.

Component (a) preferably has a melt flow rate (MFR) in the range of 0.1 - 5 g/10min. MFR is an indicator of molecular length. The range 0.1 - 5 g/10min is selected to achieve good cold weather performance, particularly avoidance of cracking. MFR is measured in accordance with JIS K6921-2.

The amount of component (a) is 40 - 90 parts by weight in the total amount of the polymers (a) and (b) of 100 parts by weight, and is preferably 60 - 85 parts by weight. When the proportion of the component (a) exceeds 90 parts by weight, the wear resistance of the composition is reduced. On the other hand, when it is less than 40 parts by weight the composition has reduced flexibility and becomes hard.

The styrene-based polymeric elastomer, component (b), is a polymeric elastomer containing styrene. The styrene-based elastomer is preferably a polymer obtained by block-copolymerising styrene with butadiene, and saturating double bonds of the resulting block-copolymer by hydrogenation (known as SEBS). Typically the ratio of the styrene/butadiene is in the range 3/7 to 2/8 by weight. Alternatively there is used for example a styrene-based elastomer obtained by block polymerising styrene and isoprene and hydrogenating the double bonds of the block copolymer (this product can be regarded as polystyrene-poly(ethylene-propylene)-polystyrene, and is known as SEPS). The styrene-based elastomer (b) may be modified with 0.1 - 10% by weight of a carboxylic acid anhydride. In this case the polymer may be prepared by a graft process or a direct process.

The amount of the styrene-based elastomer (b) in the total amount of 100 parts by weight of polymers (a) and (b) in the composition is 10 - 60 parts by weight, and preferably 15- 40 parts by weight. When the proportion of component (b) exceeds 60 parts by weight, the wear resistance of the resin composition is not improved. On the other hand, when its proportion is less than 10 parts by weight, the flexibility of the composition is poor.

The acid anhydride of component (a), and optionally also component (b) is an organic carboxylic acid anhydride, typically an unsaturated acid anhydride, preferably maleic anhydride.

Magnesium hydroxide, aluminum hydroxide and the like can be used as the metal hydroxide (c). It is preferable that the metal hydroxide particles are surface-treated with a coupling agent, particularly a silane coupling agent (for example, an aminosilane coupling agent, a vinylsilane coupling agent, an epoxysilane coupling agent, etc.) and optionally a surface-treating agent such as a higher aliphatic acid (for example, stearic acid, oleic acid, etc.) or the like. The silane coupling agent typically contains Si-O linkages which bond to the hydroxide. Particularly preferred is magnesium hydroxide or aluminum hydroxide surface-treated with a coupling agent, preferably a silane coupling agent, particularly an aminosilane coupling agent.

The amount of the metal hydroxide based on 100 parts by weight of the polymers (a) and (b) in the composition is 30 - 200 parts by weight, preferably 50 - 150 parts by weight and more preferably 70 - 100 parts by weight.

Both components (a) and (b) are selected to be halogen-free. Synthetic resin components other than components (a) and (b) are substantially absent.

Compounding agents usually included in an olefin-based resin, such as for example an oxidation inhibitor, a copper inhibitor, a lubricant and the like may be added into the resin composition of the present invention provided that the above-mentioned properties are not unacceptably deteriorated.

The resin composition of the present invention can be prepared by mixing and kneading the above-mentioned respective components by conventional methods.

The covering of an electrical wire, particularly an electrical wire for an automobile, by the resin composition of the present invention may be performed by a conventional method.

In particular, when a metal hydroxide surface-treated with an aminosilane coupling agent is used, the coupling agent bonds the metal hydroxide with the acid anhydride of the component (a) and, if present the acid anhydride of component (b). The coupling agent has a functional group reacting with the inorganic hydroxide and a functional group reacting with the organic anhydride. Also the epoxysilane and vinylsilane coupling agents have affinity to the hydroxide and the anhydride. Accordingly, the wear resistance of the resin composition is remarkably improved. Further, when an amino group exists on the lipophilic side of the silane coupling agent molecule, the reaction with polyolefin modified with an acid anhydride (i.e. component (a) and/or component (b)) advantageously suppresses the hydrophilic property of the amino group.

### EXAMPLES

The present invention is more specifically illustrated by the following Examples and Comparative Examples.

### Examples 1 - 2 and Comparative Examples 1 - 5

The components shown in Tables 1 and 2 are mixed at the amounts shown (parts by weight), and kneaded at 250-260°C by a twin-screw extruder.

The composition obtained was extrusion-molded at a covering thickness of 0.3mm around a conductor (twisted wire which consists of 7 soft copper wires, each having a diameter of 0.32mm) having a cross-section of 0.5mm². A die having a diameter of 1.6mm and a nipple having a diameter of 1.0mm were used for extrusion molding. The extrusion temperature was 210-230°C for the die and 200-240°C for cylinders, and the extrusion molding was carried out at a linear velocity of 100m/min.

The meanings of abbreviations in the Tables are as follows.
MAH-PP/EPR: a block copolymer of polypropylene with ethylene-propylene copolymer rubber, modified with 1% by weight of maleic acid anhydride. The MFR is in the range 0.1 - 5 g/10min.
MAH-SEBS: a styrene-based elastomer obtained by saturating, by hydrogenation, the double bonds of a block copolymer of styrene and butadiene modified with 1% by weight of maleic acid anhydride (TUFTECH M1913 manufactured by Asahi Chemical Co., Ltd.).
SEBS: a styrene-based elastomer obtained by saturating double bonds of a block copolymer of styrene and butadiene by hydrogenation (TUFTECH H1041 manufactured by Asahi Chemical Co., Ltd.).
MAGNIFIN H51V: magnesium hydroxide surface-treated with an aminosilane coupling agent (manufactured by alusuisse martinswerk gmbh).

As an antioxidant, a hindered phenol-based antioxidant (trade mark "TOMINOX TT" manufactured by Yoshitomi Fine Chemicals Ltd.) was used.

The flame resistance and wear resistance obtained in Examples 1 - 2 and Comparative Examples 1 - 5 were measured in accordance with JASO (Japan Automobile Standards Organisation) D 611. The wear resistance is an average of 3 samples, and a value of 300 cycles or more is deemed acceptable.

The flexibility was evaluated by touch when the electrical wire was folded.

The processability was evaluated by the presence of a whisker formation on peeling at the terminal of the electrical wire.

The results are shown in Tables 1 and 2.

**TABLE 1**

| | Example 1 | Example 2 |
|---|---|---|
| MAH-PP/EPR (PP:EPR=30:70, weight ratio) | 80 | 80 |
| MAH-SEBS | 20 | - |
| SEBS | - | 20 |
| MAGNIFIN H51V | 90 | 90 |
| Antioxidant | 1 | 1 |
| Flame resistance | acceptable | acceptable |
| Wear resistance | acceptable | acceptable |
| Flexibility | good | good |
| Processability | good | good |

**TABLE 2**

| | Comparative Example 1 | Comparative Example 2 | Comparative Example 3 | Comparative Example 4 | Comparative Example 5 |
|---|---|---|---|---|---|
| MAH-PP/EPR (PP:EPR=30:70, weight ratio) | - | - | 100 | 95 | 20 |
| MAH-PP/EPR (PP:EPR=2:98, weight ratio) | 80 | - | - | - | - |
| MAH-PP/EPR (PP:EPR=60:40, weight ratio) | - | 80 | - | - | - |
| MAH-SEBS | 20 | 20 | - | - | 80 |
| SEBS | - | - | - | 5 | - |
| MAGNIFIN H51V | 90 | 90 | 90 | 90 | 90 |
| Antioxidant | 1 | 1 | 1 | 1 | 1 |
| Flame resistance | acceptable | acceptable | acceptable | acceptable | acceptable |
| Wear resistance | not acceptable | acceptable | acceptable | acceptable | not acceptable |
| Flexibility | good | bad | bad | bad | good |
| Processability | good | good | good | good | good |

The result of Comparative Example 1 shows that when the weight ratio of polypropylene in the copolymer of polypropylene with ethylene-propylene modified with an acid anhydride is too small, the wear resistance of the resin composition is not improved.

The result of Comparative Example 2 shows that when the weight ratio of polypropylene in the copolymer of polypropylene with ethylene-propylene modified with an acid anhydride is too high, the flexibility of the resin composition is poor.

The results of Comparative Examples 3 and 4 show that when the styrene-based elastomer is not present or its amount is little, the flexibility of the resin composition is low.

The result of Comparative Example 5 shows that when the amount of the styrene-based elastomer is too high, the wear resistance of the resin composition is not improved.

## Claims

1. A resin composition containing the components:-
(a) 40 - 90 parts by weight of a block copolymer of polypropylene segments and ethylene-propylene copolymer segments which is modified with acid anhydride, in which the polypropylene segment content is in the range 5 - 50% by weight,
(b) 60 - 10 parts by weight of a styrene-based polymeric elastomer,
wherein the total of components (a) and (b) is 100 parts by weight and no other resin component is present in the composition, and
(c) 30 - 200 parts by weight of a metal hydroxide.

2. A resin composition according to claim 1, in which component (b) is a styrene-based polymeric elastomer modified with acid anhydride.

3. A resin composition according to claim 2, wherein at least one of components (a) and (b) is obtained by a graft process or a direct process.

4. A resin composition according to any one of claims 1 to 3, wherein the acid anhydride of component (a) is maleic anhydride.

5. A resin composition according to claim 2, wherein the acid anhydride of component (b) is maleic anhydride.

6. A resin composition according to any one of claims 1 to 5, wherein component (a) has a melt flow rate of 0.1 - 5 g/10min, measured in accordance with JIS K6921-2.

7. A resin composition according to any one of claims 1 to 6, wherein component (b) is a hydrogenated styrene-butadiene copolymer or a hydrogenated styrene-isoprene copolymer.

8. A resin composition according to any one of claims 1 to 7, wherein component (c) is one of magnesium hydroxide surface-treated with a coupling agent and aluminum hydroxide surface-treated with a coupling agent.

9. A resin composition according to claim 8, wherein the coupling agent is a silane coupling agent.

10. A method of preparing a resin composition, comprising thoroughly mixing the following components:-
(a) 40 - 90 parts by weight of a block copolymer of polypropylene segments and ethylene-propylene copolymer segments which is modified with acid anhydride, in which the polypropylene segment content is in the range 5 - 50% by weight,
(b) 60 - 10 parts by weight of a styrene-based polymeric elastomer,
wherein the total of components (a) and (b) is 100 parts by weight, and
(c) 30 - 200 parts by weight of a metal hydroxide, no other resin component being included in the composition.

11. A method according to claim 10, in which component (b) is a styrene-based polymeric elastomer modified with acid anhydride.

12. A method according to claim 11, wherein at least one of components (a) and (b) is obtained by one of a graft process and a direct process.

13. A method according to any one of claims 10 to 12, wherein the acid anhydride of component (a) is maleic anhydride.

14. A method according to claim 11, wherein the acid anhydride of component (b) is maleic anhydride.

15. A method according to any one of claims 10 to 14, wherein component (a) has a melt flow rate of 0.1 - 5 g/10min., measured in accordance with JIS K6921-2.

16. A method according to any one of claims 10 to 15, wherein component (b) is a hydrogenated styrene-butadiene copolymer or a hydrogenated styrene-isoprene copolymer.

17. A method according to any one of claims 10 to 16, wherein component (c) is one of magnesium hydroxide surface-treated with a coupling agent and aluminum hydroxide surface-treated with a coupling agent.

18. A method according to claim 17, wherein the coupling agent is a silane coupling agent.

19. An electrical wire having an electrical conductor and a covering thereon made of a resin composition according to any one of claims 1 to 9.

## Patentansprüche

1. Harzzusammensetzung, welche die Komponenten enthält:
(a) 40 bis 90 Gewichtsteile eines mit Säureanhydrid modifizierten Blockcopolymers aus Polypropylensegmenten und Ethylen-Propylencopolymersegmenten, in welchem der Polypropylensegmentgehalt in dem Bereich von 5 bis 50 Gew.-% liegt,
(b) 60 bis 10 Gewichtsteile eines auf Styrol basierenden polymeren Elastomers,
wobei die Summe der Komponenten (a) und (b) 100 Gewichtsteile beträgt und keine andere Harzkomponente in der Zusammensetzung vorliegt, und
(c) 30 bis 200 Gewichtsteile eines Metallhydroxids.

2. Harzzusammensetzung nach Anspruch 1, in welcher Komponente (b) ein auf Styrol basierendes polymeres Elastomer ist, das mit Säureanhydrid modifiziert ist.

3. Harzzusammensetzung nach Anspruch 2, wobei mindestens eine der Komponenten (a) und (b) durch ein Propfverfahren oder ein Direktverfahren erhalten ist.

4. Harzzusammensetzung nach einem der Ansprüche 1 bis 3, wobei das Säureanhydrid von Komponente (a) Maleinsäureanhydrid ist.

5. Harzzusammensetzung nach Anspruch 2, wobei das Säureanhydrid von Komponente (b) Maleinsäureanhydrid ist.

6. Harzzusammensetzung nach einem der Ansprüche 1 bis 5, wobei Komponente (a) eine Schmelzfließrate von 0,1 bis 5 g/10 min aufweist, gemessen gemäß JIS K6921-2.

7. Harzzusammensetzung nach einem der Ansprüche 1 bis 6, wobei Komponente (b) ein hydriertes Styrol-Butadiencopolymer oder ein hydriertes Styrol-Isoprencopolymer ist.

8. Harzzusammensetzung nach einem der Ansprüche 1 bis 7, wobei Komponente (c) eines von mit einem Kupplungsmittel oberflächenbehandeltes Magnesiumhydroxid und mit einem Kupplungsmittel oberflächenbehandeltes Aluminiumhydroxid ist.

9. Harzzusammensetzung nach Anspruch 8, wobei das Kupplungsmittel ein Silankupplungsmittel ist.

10. Verfahren zur Herstellung einer Harzzusammensetzung, umfassend das gründliche Mischen der folgenden Komponenten:
(a) 40 bis 90 Gewichtsteile eines mit Säureanhydrid modifizierten Blockcopolymers aus Polypropylensegmenten und Ethylen-Propylencopolymersegmenten, in welchem der Polypropylensegmentgehalt in dem Bereich von 5 bis 50 Gew.-% liegt,
(b) 60 bis 10 Gewichtsteile eines auf Styrol basierenden polymeren Elastomers,
wobei die Summe der Komponenten (a) und (b) 100 Gewichtsteile beträgt, und
(c) 30 bis 200 Gewichtsteile eines Metallhydroxids,
wobei keine andere Harzkomponente in der Zusammensetzung beinhaltet ist.

11. Verfahren nach Anspruch 10, in welchem Komponente (b) ein auf Styrol basierendes polymeres Elastomer ist, das mit Säureanhydrid modifiziert ist.

12. Verfahren nach Anspruch 11, wobei mindestens eine der Komponenten (a) und (b) durch ein Propfverfahren oder ein Direktverfahren erhalten ist.

13. Verfahren nach einem der Ansprüche 10 bis 12, wobei das Säureanhydrid von Komponente (a) Maleinsäureanhydrid ist.

14. Verfahren nach Anspruch 11, wobei das Säureanhydrid von Komponente (b) Maleinsäureanhydrid ist.

15. Verfahren nach einem der Ansprüche 10 bis 14, wobei Komponente (a) eine Schmelzfließrate von 0,1 bis 5 g/10 min aufweist, gemessen gemäß JIS K6921-2.

16. Verfahren nach einem der Ansprüche 10 bis 15, wobei Komponente (b) ein hydriertes Styrol-Butadiencopolymer oder ein hydriertes Styrol-Isoprencopolymer ist.

17. Verfahren nach einem der Ansprüche 10 bis 16, wobei Komponente (c) eines von mit einem Kupplungsmittel oberflächenbehandeltes Magnesiumhydroxid und mit einem Kupplungsmittel oberflächenbehandeltes Aluminiumhydroxid ist.

18. Verfahren nach Anspruch 17, wobei das Kupplungsmittel ein Silankupplungsmittel ist.

19. Leitungsdraht mit einem elektrischen Leiter und einem Überzug darauf, der aus einer Harzzusammensetzung nach einem der Ansprüche 1 bis 9 hergestellt ist.

## Revendications

1. Composition de résine contenant les composants :
(a) 40-90 parties en poids d'un copolymère séquencé de segments de polypropylène et de segments d'un copolymère d'éthylène-propylène qui est modifié par de l'anhydride d'acide, dans lequel la teneur en segments de polypropylène est comprise entre 5 et 50 % en poids,
(b) 60-10 parties en poids d'un élastomère polymérique à base de styrène,
où le total des composants (a) et (b) est de 100 parties en poids et aucun autre composant de résine n'est présent dans la composition, et
(c) 30-200 parties en poids d'un hydroxyde de métal.

2. Composition de résine selon la revendication 1, dans laquelle le composant (b) est un élastomère polymérique à base de styrène modifié par un anhydride d'acide.

3. Composition de résine selon la revendication 2, où au moins l'un des composants (a) et (b) est obtenu par un procédé de greffer ou un procédé direct.

4. Composition de résine selon l'une quelconque des revendications 1 à 3, où l'anhydride d'acide du composant (a) est l'anhydride maléique.

5. Composition de résine selon la revendication 2, où l'anhydride d'acide du composant (b) est l'anhydride maléique.

6. Composition de résine selon l'une quelconque des revendications 1 à 5, où le composant (a) a un indice d'écoulement en phase fondue de 0,1-5 g/10min, en mesurant selon JIS K6921-2.

7. Composition de résine selon l'une quelconque des revendications 1 à 6, où le composant (b) est un copolymère de styrène-butadiène hydrogéné ou un copolymère de styrène-isoprène hydrogéné.

8. Composition de résine l'une quelconque des revendications 1 à 7, où le composant (c) est l'un d'hydroxyde de magnésium traité en surface par un agent de couplage et d'hydroxyde d'aluminium traité en surface par une agent de couplage.

9. Composition de résine selon la revendication 8, où l'agent de couplage est un agent de couplage de silane.

10. Méthode de préparation d'une composition de résine comprenant le mélange complet des composants qui suivent :
(a) 40-90 parties en poids d'un copolymère séquencé de segments de polypropylène et de segments d'un copolymère d'éthylène-propylène qui est modifié par de l'anhydride d'acide, dans lequel la teneur en segments de polypropylène est comprise entre 5 et 50 % en poids,
(b) 60-10 parties en poids d'un élastomère polymérique à base de styrène,
où le total des composants (a) et (b) est de 100 parties en poids, et
(c) 30-200 parties en poids d'un hydroxyde de métal, aucun autre composant de résine n'est présent dans la composition.

11. Méthode selon la revendication 10, dans laquelle le composant (b) est un élastomère polymérique à base de styrène modifié par un anhydride d'acide.

12. Méthode selon la revendication 11, où au moins l'un des composants (a) et (b) est obtenu par l'un procédé de greffe et d'un procédé direct.

13. Méthode selon l'une quelconque des revendications 10 à 12, l'anhydride d'acide du composant (a) est l'anhydride maléique.

14. Méthode selon la revendication 11, où l'anhydride d'acide du composant (b) est l'anhydride maléique.

15. Méthode selon l'une quelconque des revendications 10 à 14, où le composant (a) a un indice d'écoulement en phase fondue de 0,1-5 g/10min., mesuré en accord avec JIS K6921-2.

16. Méthode selon l'une quelconque des revendications 10 à 15, où le composant (b) est un copolymère de styrène-butadiène hydrogéné ou un copolymère de styrène-isoprène hydrogéné.

17. Méthode selon l'une quelconque des revendications 10 à 16, où le composant c) est l'un d'un hydroxyde de magnésium traité en surface par un agent de couplage et d'un hydroxyde d'aluminium traité en surface par une agent de couplage.

18. Méthode selon la revendication 17, où l'agent de couplage est un agent de couplage de silane.

19. Fil électrique ayant un conducteur électrique et un recouvrement fait d'une composition de résine selon une quelconque des revendications 1 à 9.
